Europäisches Patentamt

European Patent Office

Office européen des brevets

(19)

(11) Publication number : **0 507 670 A1**

(12) # EUROPEAN PATENT APPLICATION

(21) Application number : **92400895.6**

(22) Date of filing : **31.03.92**

(51) Int. Cl.⁵ : **H05B 6/68, F24C 7/08, H03K 17/296, G05B 19/10**

(30) Priority : **01.04.91 KR 523091**

(43) Date of publication of application : **07.10.92 Bulletin 92/41**

(84) Designated Contracting States : **DE FR GB**

(71) Applicant : **GOLDSTAR CO. LTD.**
**20, Yoido-Dong Yongdungpo-Ku**
**Seoul (KR)**

(72) Inventor : **Shin, Dong Seong**
**14-5 Kaeumjung-Dong, Changwon**
**Kyungsangnam-Do (KR)**

(74) Representative : **Fort, Jacques**
**CABINET PLASSERAUD 84, rue d'Amsterdam**
**F-75009 Paris (FR)**

(54) **A process for controlling a reserve-cooking operation of a microwave oven.**

(57) A process for controlling a reserve-cooking operation of a microwave oven. The process comprises a cooking reservation step for inputting automatic cooking reservation data of a desired cooking menu, a desired cooking end time through a control panel, a cooking control data selection step for selecting a heating time and cooking control data, each corresponding to the automactic cooking reservation data, and setting the heating time and the cooking control data, a cooking start time calculating step for calculating a cooking start time of the reserved cooking operation by subtracting the heating time from the desired cooking end time, a cooking start step for counting the present time in order to determine whether the present time is the cooking start time, and driving a magnetron when it is determined that the present time is the cooking start time, thereby starting the reserve-cooking operation, and a cooking end step for stopping the magnetron in order to finish the reserve-cooking operation when the heating time lapses away. The present invention provides advantage in that it reliable ends the cooking operation at the desired cooking end time, thereby allowing the operator to effectively use his or her time for another work simultaneously with cooking.

# FIG. 4

```
           START
             │
             ▼
┌────────────────────────────┐
│ PRESS RESERVATION KEY,      │
│ INPUT COOKING FINISHING TIME,│  STEP 1
│ SELECT COOKING MENU.         │
│ PRESS START KEY              │
└────────────────────────────┘
             │
             ▼
┌────────────────────────────┐
│ SELECT AUTOMATIC COOKING    │  STEP 2
│ CONTROL INFORMATION         │
└────────────────────────────┘
             │
             ▼
┌────────────────────────────┐
│ COOKING START TIME =        │
│ COOKING FINISHING TIME -    │  STEP 3
│ HEATING TIME                │
└────────────────────────────┘
             │
             ▼          STEP 4
      ◇ COOKING START TIME ? ◇──── No ───┐
             │ Yes                        │
             ▼                            │
┌────────────────────────────┐           │
│ DRIVE MAGNETRON             │           │
└────────────────────────────┘           │
             │◄───────────────────────────┘
             ▼
      ◇ HEATING TIME ELAPSED ? ◇──── No ──┐
             │ Yes                         │
             ▼                             │
┌────────────────────────────┐            │
│ STOP MAGNETRON AT THE       │            │
│ INPUTTED COOKING FINISHING  │  STEP 5    │
│ TIME.                       │            │
│ FINISH COOKING OPERATION    │            │
└────────────────────────────┘            │
             │◄────────────────────────────┘
             ▼
           END
```

EP 0 507 670 A1

Jouve, 18, rue Saint-Denis, 75001 PARIS

## BACKGROUND OF THE INVENTION

### 1. Field of the Invention

The present invention generally relates to a reserve-cooking operation of a microwave oven, and more particularly to a process for controlling such reserve-cooking operation of the microwave oven in which upon receiving an input signal representing a desired cooking time, a microcomputer calculates a cooking start time, and drives a magnetron at the cooking start time in order to start the cooking operation, so that the desired cooking is correctly accomplished at the time when the inputted desired cooking time lapses away, thereby allowing the operator to effectively use his or her time for another work simultaneously with cooking.

### 2. Description of the Prior Art

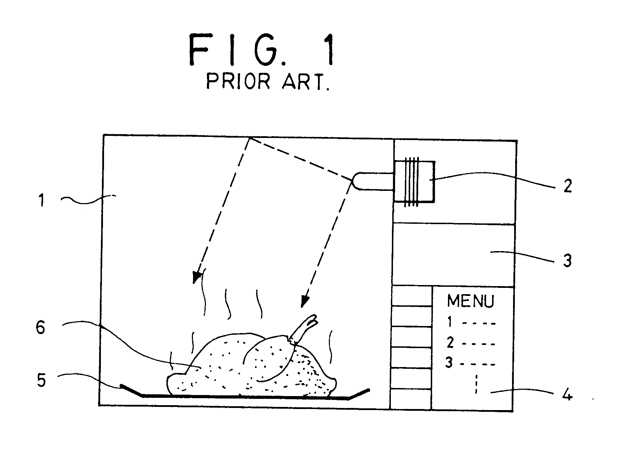

With reference to FIG. 1 showing a construction of a known microwave oven, the microwave oven generally comprises a magnetron 2 which generates a predetermined microwave energy at a frequency of 2450 MHz for heating foodstuffs 6 in a heating cavity 1. The heating cavity 1 is constructed to efficiently shield the microwave energy generated by the magnetron 2 and also to allow the foodstuffs 6 to be contained therein. The heating cavity 1 is also provided with a rotary tray 5, being conventionally constructed of glass, on which the foodstuffs 6 are located and which is able to rotate. In adition, the microwave oven has a control panel 4 through which the operator can input automatic cooking reservation data for a desired reserve-cooking operation of the oven, such as a desired type of cooking and a cooking start time. A microcomputer 3, storing therein cooking control data for controlling the automatic cooking operation of the oven, such as data for heating time and heating style which are predetermined by experiments in accordance with several types of cooking, is provided to control the magnetron 2 in accordance with cooking control data which are stored therein and inputted by the operator through the control panel 4, respectively, thereby performing the desired automatic cooking operation. Besides the above elements, the known microwave oven is generally provided with other peripheral equipments (not shown) such as a step motor for providing a rotating power for the rotary tray 5, a plurality of sensors for sensing the present cooking temperature, amount of exhaust gas, etc., respectively, a display for indicating thereon the cooking conditions, and several driving circuits.

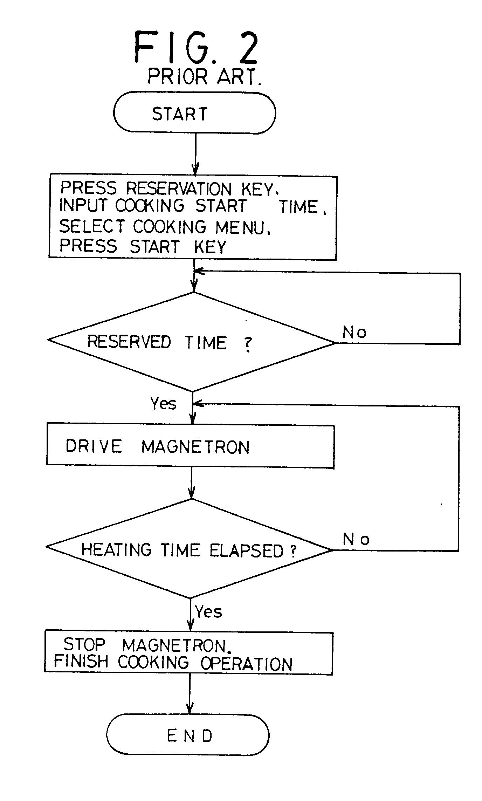

FIG. 2 depicts a flowchart suitable for controlling the microcomputer 3 and associated equipments of FIG. 1 to perform the automatic cooking operation in accordance with an inputted reserved cooking time.

As shown in the drawing, the operator first presses an automatic cooking reservation key of the control panel 4, sets a desired cooking start time, selects a desired cooking menu, then pushes a start key of the control panel 4. Thereafter, the micorcomputer 3 treats data of the heating time and the heating style in accordance with the inputted cooking menu, and sets the calculated data as an automatic cooking control data.

Sequentially, the microcomputer 3 determines whether the present time is the cooking start time. If it is determined that the present time is the cooking start time, the microcomputer 3 drives the magnetron 2 in order to cause the foodstuffs 6 to be heated. Thereafter, when the predetermined heating time corresponding to the selected cooking menu lapses away, the microcomputer 3 stops the magnetron 2, thereby causing the desired cooking operation to be ended.

However, in the process for controlling the automatic cooking operation of the known microwave oven in accordance with the reserved cooking time, several types of required heating time corresponding to the cooking menus are previously stored in the microcomputer 3, respectively, thus the cooking time required for a selected cooking menu is determined depending upon the heating time corresponding to the selected cooking menu. As a result, the operator can not recognize the accurate cooking time which is required for accomplishing the selected cooking menu, thus he or she is obliged to presume the cooking time and to reserve the cooking start time which is resulted from subtracting the presumed cooking time from a desired cooking end time.

In accordance, if the practically required cooking time is shorter than the presumed cooking time, the cooking for the foodstuffs will be ended before the desired cooking end time, that is, before the time when the cooked foodstuffs are required, thereby causing the cooked foodstuffs to substantially get cold, when they are to be ingested, thus to be again heated. On the contrary, if the practically required cooking time is longer than the presumed cooking time, the cooking for the foodstuffs will not be ended even though the desired cooking end time lapses away, thereby causing the operator to additionally wait for a time which is practically required for ending the cooking operation. Hence, the automatic reserve-cooking operation of the known microwave oven has disadvantage in that the operator is obliged to set a presumed cooking start time because he or she does not accurately recognize the practically required cooking time for the desired cooking menu, thus he or she does not accurately set the cooking end time, thereby causing the microwave oven to fail in performing an effective reserve-cooking function.

## SUMMARY OF THE INVENTION

It is, therefore, an object of the present invention to provide a process for controlling an automatic reserve-cooking operation of a microwave oven in which the above disadvantage can be overcome, and depending upon a desired cooking end time set by the operator, the cooking is accurately ended at the desired cooking end time.

The above-mentioned object of the present invention can be accomplished by providing a process for controlling a reserve-cooking operation of a microwave oven comprising: a cooking reservation step for inputting automatic cooking reservation data of a desired cooking menu, a desired cooking end time through a control panel; a cooking control data selection step for selecting a heating time and cooking control data, each corresponding to the automatic cooking reservation data, and setting the heating time and the cooking control data; a cooking start time calculating step for calculating a cooking start time of the reserve-cooking operation by using the heating time and the desired cooking end time; a cooking start step for counting the present time in order to determine whether the present time is the cooking start time, and driving a magnetron when it is determined that the present time is the cooking start time, thereby starting the reserve-cooking operation; and a cooking end step for stopping the magnetron in order to finish the reserve-cooking operation when the heating time lapses away.

## BRIEF DESCRIPTION OF THE DRAWINGS

The above and other objects, features and advantages of the present invention will be more clearly understood from the following detailed description taken in conjunction with the accompanying drawings, in which:

FIG. 1 is a schematic view showing a construction of a microwave oven in accordance with the prior art;

FIG. 2 is a flowchart suitable for controlling a microcomputer and associated equipments of FIG. 1 to perform an automatic reserve-cooking operation in accordance with an inputted reserved time of cooking;

FIG. 3 is a view corresponding to FIG. 1, but showing the present invention; and

FIG. 4 is a flowchart suitable for controlling a microcomputer and associated equipments of FIG. 3 to perform an automatic cooking operation in accordance with an inputted automatic cooking reservation data.

## DESCRIPTION OF THE PREFERRED EMBODIMENTS

Briefly described first, the present invention provides a process for controlling an automatic reserve-cooking operation of a microwave oven in which it is possible to reserve a desired cooking end time instead of a cooking start time, differently from the prior art, in order to cause the reserve-cooking operation to be accurately ended at the cooking end time.

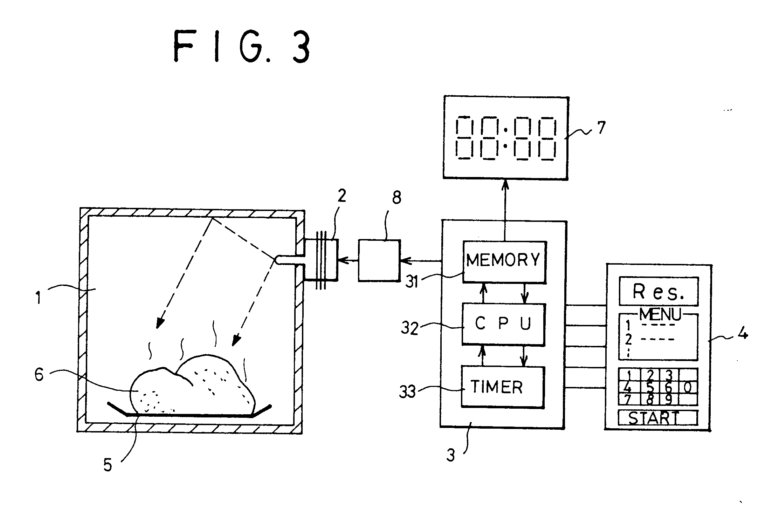

Referring to FIG. 3 showing a construction of an embodiment of a microwave oven in accordance with the present invention, the microwave oven comprises a magnetron 2 which generates a predetermined microwave energy at a frequency of 2450 MHz for heating foodstuffs 6 in a heating cavity 1. The heating cavity 1 is constructed to efficiently shield the microwave energy generated by the magnetron 2 and also to allow the foodstuffs 6 to be contained therein. The heating cavity 1 is also provided with a rotary glass tray 5 on which the foodstuffs 6 are disposed and which is rotatable. In addition, the microwave oven has a control panel 4, equipped on a housing thereof, by which the operator can input data of a desired automatic reserve-cooking operation of the oven, such as data of desired type of cooking menu and a desired cooking end time. A microcomputer 3 which stores data for controlling the automatic cooking operation of the oven, such as data of a heating time and a heating style according to cooking types, is provided in order to control the oscillating operation of the magnetron 2 in accordance with data which are stored therein and data inputted by the operator through the control panel 4, thereby performing the process for accomplishing the desired automatic cooking operation. In addition, the microwave oven is provided with a display 7 for indicating the reserved time and a magnetron driving part 8 for driving the magnetron 2, both being operated under the control of the microcomputer 3. Besides the above described elements, the microwave oven is provided with other peripheral equipments(not shown) such as a step motor for providing a rotating power for the glass tray 5, a plurality of sensors for sensing the cooking temperature inside the heating cavity 1, amount of exhaust gas, etc., and several driving circuits.

Here, it is possible to use a conventional microcomputer as the microcomputer 3. The microcomputer 3 generally comprises a memory 31 for storing several types of heating times predetermined according to the cooking menus, a central processing unit(CPU) 32 which receives a heating time, corresponding to the data of the desired cooking operation inputted by the operator through the control panel 4, from the memory 31, and calculates an accurate cooking start time by subtracting the received heating time from the cooking end time inputted by the operator, thereby controlling the automatic reserve-cooking operation of the oven. In addition, the microcomputer 3 is equipped with a timer 33 for counting the lapse of time in order to allow the CPU 32 to accurately start the cooking operation at the cooking start time and to end the cooking operation at the desired cooking end time.

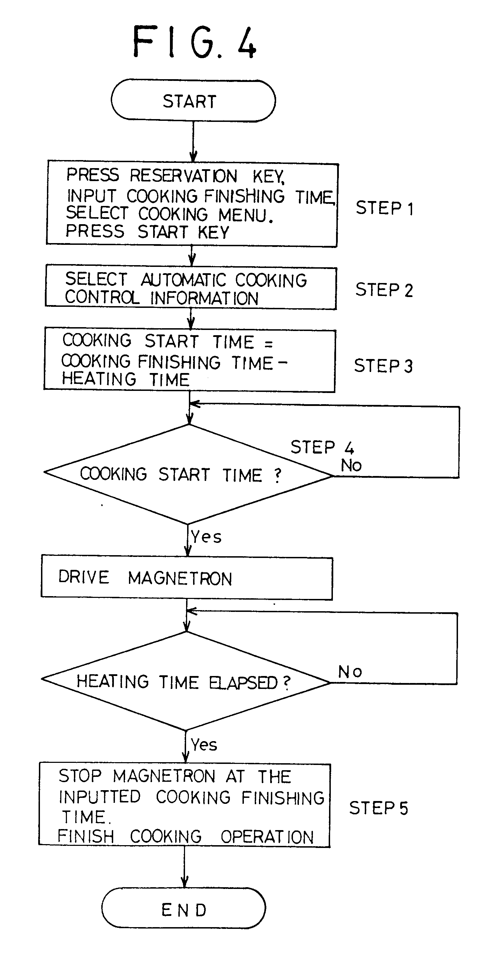

Hereinafter, it will be described in detail a process for controlling an automatic reserve-cooking operation of the microwave oven of the above construction in conjunction with a flowchart of FIG. 4.

If briefly described, the CPU 32 of the microcomputer 3 receives data of a heating time corresponding to a selected cooking menu from the memory 31, and calculates a cooking start time by subtracting the heating time from a reserved cooking end time inputted by the operator through the control panel 4, then sets a program for starting the automatic reversed-cooking operation at the cooking start time.

The process for controlling the reserve-cooking operation of the microwave oven comprises sequential five steps as shown in FIG. 4, that is, an automatic cooking reservation step (step 1) wherein the operator inputs automatic cooking end time and the like through the control panel 4; a cooking control data selection step(step 2) wherein the microcomputer 3 selects cooking control data corresponding to the automatic cooking reservation data inputted at the step 1 and sets the cooking control data; a cooking start time calculating step(step 3) wherein upon receiving a heating time corresponding to the selected cooking menu, the microcomputer 3 calculates a cooking start time by subtracting the heating time corresponding to the selected cooking menu from the desired cooking end time inputted at the step 1; a cooking start step(step 4) wherein the microcomputer counts the present time in order to drive the magnetron 2 at the cooking start time, thereby starting the reserve-cooking operation; and a cooking end step(step 5) wherein when the heating time lapses away, the microcomputer 3 stops the magnetron 2 in order to finish the reserve-cooking operation at the cooking end time.

If described in detail, at the step 1 the operator presses a reservation key so that the display 7 indicates "Reservation" signal by turning on a display light simultaneously with displaying "00:00" at a time signal and flickering "Hour" signal, thereby accomplishing a reservation standby for allowing the operator to input the desired cooking end time. For example, if the operator wants to make the reserve-cooking operation to be ended at 06:30 of the next day, he or she presses the reservation key, and sequentially presses the number keys of "0" and "6" so as to set the desired hour of the cooking end time, then again presses the reservation key. In result, the "Hour" signal changes from the flickering state to the turn-on state and a "Minute" signal is flickered. Thereafter, the operator sequentially presses the number keys "3" and "0" so as to set the desired minute of the cooking end time, then again presses the reservation key. In result, the "Minute" signal changes from the flickering state to the turn-on state and also the desired cooking end time of "06:00" is set. Sequentially, the operator selects a desired cooking menu and presses a start key of the control panel 4, thereby causing the microcomputer 3 to accomplish the automatic cooking reservation step(step 1).

At this time, the microcomputer 3 stores data of heating times corresponding to the respective cooking menus in the memory 31 thereof, as described above. Therefore, at the step 2 the CPU 32 of the microcomputer 3 receives a heating time corresponding to the cooking menu selected by the operator from the memory 31. For example, if the memory 31 stores data of four types of heating times, that is, 10 minutes for A-type cooking, 20 minutes for B-type cooking, 30 minutes for C-type cooking and 40 minutes for D-type cooking, the CPU 31 receives the data of heating time of 40 minutes corresponding to the D-type cooking from the memory 31.

As described above, at the step 1 the operator inputs the automatic cooking reservation data through the control panel 4, and at the step 2 the microcomputer 3 receives data of the heating time corresponding to the inputted automatic cooking reservation data, and also selects control data for controlling the reserve-cooking operation corresponding to the inputted automatic cooking reservation data in order to set the control data. In accordance, the microcomputer 3 performs the stpes 3 wherein it calculates a cooking start time by subtracting the heating time, for example, 40 minutes, from the cooking end time, for example, 06:30 of the next day, resulting in calculating the cooking start time, for example, 05:50 of the next day when the microcomputer 3 initially drives the magnetron 2 in order to start the D-type cooking operation.

After performing the step 3, at the step 4 the CPU 32 of the microcomputer 3 checks time data applied from the timer 33 thereto in order to determine whether the present time is the calculated cooking start time. That is, the CPU 32 compares the time data of the calculated cooking start time. If it is determined that the present time counted by the timer 33 is the calculated cooking start time, the CPU 32 drives the magnetron 2 by way of the magnetron driving part 8 in order to generate the microwave energy, thereby causing the cooking operation to be started.

Thereafter, the CPU 32 compares the time data from the timer 33 with data of the heating time, for example, 40 minutes for the D-type cooking, in order to determine whether the heating time lapses away. If it is determined that the heating time lapses away, the CPU 32 stops the magnetron 2 so as to finish the cooking operation. Thus, the reserved cooking operation, for example, the D-type cooking operation, can be ended at the desired cooking end time, for example, 06:30 of the next day.

As described above, the present invention provides a process for controlling a reserve-cooking operation of a microwave oven in which the operator simply reserves a desired cooking end time of a desired type of cooking through a control panel, thus a microcomputer calculates an accurate cooking start time by subtracting a heating time corresponding to the desired type of cooking from the reserved cooking end time, thereby making it possible to accomplish the desired type of cooking at the cooking end time.

As a result, the process of the present invention solves the problems of the prior art in that in case of a practically required cooking time being shorter than the presumed cooking time, the cooking operation will be ended before the desired cooking end time so that the cooked foodstuffs substantially get cold when they are to be ingested, thus they must be again heated, while in case of a practically required cooking time being longer than the presumed cooking time, the cooking operation will not be ended even though the desired cooking end time lapses away so that the operator is obliged to additionally wait until the cooking operation is practically ended. Therefore, the process of the present invention provides advantage in that it improves functional effect of the reserve-cooking operation of the microwave oven, and reliably ends the cooking operation at the desired cooking end time so that it allows the operator to effectively use his or her time for another work simultaneously with cooking.

Although the preferred embodiments of the present invention have been disclosed for illustrative purposes, those skilled in the art will appreciate that various modifications, additions and substitutions are possible, without departing from the scope and spirit of the invention as disclosed in the accompanying claims.

## Claims

1. A process for controlling a reserve-cooking operation of a microwave oven comprising:

    a cooking reservation step for inputting automatic cooking reservation data of a desired cooking menu and a desired cooking end time through a control panel;

    a cooking control data selection step for selecting a heating time and cooking control data, each corresponding to said automatic cooking reservation data, and setting said heating time and said cooking control data;

    a cooking start time calculating step for calculating a cooking start time of said reserved cooking operation by using said heating time and said desired cooking end time;

    a cooking start step for counting the present time in order to determine whether the present time is said cooking start time, and driving a magnetron when it is determined that the present time is the cooking start time, thereby starting the reserve-cooking operation; and

    a cooking end step for stopping said magnetron in order to end the reserve-cooking operation when the heating time lapses away.

2. A process according to claim 1, wherein said cooking start time is calculated by subtracting said heaing time from said desired cooking end time.

# F I G. 1
## PRIOR ART.

# FIG. 2
## PRIOR ART.

```
        ┌─────────────┐
        │    START    │
        └─────────────┘
               │
               ▼
┌──────────────────────────────┐
│ PRESS RESERVATION KEY.        │
│ INPUT COOKING START    TIME.  │
│ SELECT COOKING MENU.          │
│ PRESS START KEY               │
└──────────────────────────────┘
               │
               ▼
          ◇─────────────◇
         ╱ RESERVED TIME ? ╲────── No ──┐
          ◇─────────────◇             │
               │ Yes  ◄───────────────┘
               ▼
┌──────────────────────────────┐
│ DRIVE   MAGNETRON             │
└──────────────────────────────┘
               │
               ▼
          ◇─────────────────◇
         ╱ HEATING TIME ELAPSED ? ╲──── No ──┐
          ◇─────────────────◇               │
               │ Yes                          │
               ▼        ◄─────────────────────┘
┌──────────────────────────────┐
│ STOP   MAGNETRON.             │
│ FINISH COOKING OPERATION      │
└──────────────────────────────┘
               │
               ▼
        ┌─────────────┐
        │    END      │
        └─────────────┘
```

7

# F I G. 3

# FIG. 4

START

PRESS RESERVATION KEY,
INPUT COOKING FINISHING TIME,
SELECT COOKING MENU.
PRESS START KEY — STEP 1

SELECT AUTOMATIC COOKING
CONTROL INFORMATION — STEP 2

COOKING START TIME =
COOKING FINISHING TIME -
HEATING TIME — STEP 3

STEP 4

COOKING START TIME ? — No

Yes

DRIVE MAGNETRON

HEATING TIME ELAPSED ? — No

Yes

STOP MAGNETRON AT THE
INPUTTED COOKING FINISHING
TIME.
FINISH COOKING OPERATION — STEP 5

END

European Patent
Office

**EUROPEAN SEARCH REPORT**

Application Number

EP   92 40 0895
PAGE1

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | DE-A-2 733 362 (ALFONS WEISS KG) <br> * page 6, line 17 - page 8, line 14 * <br> * page 10, line 1 - page 13, line 10; claims 1,6,8-16; figures 1,2 * <br> --- | 1,2 | H05B6/68 <br> F24C7/08 <br> H03K17/296 <br> G05B19/10 |
| X | PATENT ABSTRACTS OF JAPAN <br> vol. 5, no. 139 (M-86)(811) 3 September 1981 <br> & JP-A-56 071 727 ( SANYO ) 15 June 1981 <br> * abstract * <br> --- | 1,2 | |
| X | PATENT ABSTRACTS OF JAPAN <br> vol. 12, no. 347 (M-743)(3194) 19 September 1988 <br> & JP-A-63 108 125 ( SHARP ) 13 May 1988 <br> * abstract * <br> --- | 1 | |
| A | GB-A-2 206 222 (CREDA) <br> *abstract; page 1, line 13 - page 2, line 7; page 4, line 12 - page 5, line 2; page 5, line 20 - page 6, line 22; claims 1,2,5,6; figure 1* <br> --- | 1 | |
| A | GB-A-2 205 177 (EATON CONTROLS) <br> *page 1, line 21 - page 2, line 29; page 10, lines 10 - 21; page 11, lines 4 - 15; figures 1,2* <br> --- | 1 | **TECHNICAL FIELDS SEARCHED (Int. Cl.5)** <br><br> H05B <br> F24C |
| A | PATENT ABSTRACTS OF JAPAN <br> vol. 14, no. 379 (M-1012)(4322) 16 August 1990 <br> & JP-A-2 140 512 ( TOSHIBA CORP ) 30 May 1990 <br> * abstract * <br> --- | 1 | H03K <br> G05B |
| A | EP-A-0 156 716 (CEPEM) <br> *abstract; page 1, line 26 - page 2, line 34; page 5, line 27 - page 6, line 35; figure 1 * <br> --- | 1 | |
| A | EP-A-0 106 898 (MATSUSHITA ELECTRIC INDUSTRIAL CO.) <br> *abstract; page 4, line 13 - page 6, line 16; figures 2,3,6 * <br> --- <br><br> -/-- | 1 | |

The present search report has been drawn up for all claims

| Place of search | Date of completion of the search | Examiner |
|---|---|---|
| BERLIN | 07 JULY 1992 | BEITNER M. |

EPO FORM 1503 03.82 (P0401)

**European Patent Office**

## EUROPEAN SEARCH REPORT

Application Number

EP 92 40 0895
PAGE2

### DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | US-A-4 396 817 (ECK ET. AL)<br>*abstract; column 4, lines 1 - 68; column 9, line 41 - column 10, line 27; figure 1 * | 1,2 | |
| | ----- | | |
| | | | TECHNICAL FIELDS SEARCHED (Int. Cl.5) |

The present search report has been drawn up for all claims

| Place of search | Date of completion of the search | Examiner |
|---|---|---|
| BERLIN | 07 JULY 1992 | BEITNER M. |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P0401)